# EUROPÄISCHE PATENTANMELDUNG

(11) **EP 2 255 993 A2**
(43) Veröffentlichungstag der Anmeldung: **01.12.2010**
(21) Anmeldenummer: 10005030.1
(22) Anmeldetag: 12.05.2010
(51) Int. Cl.: B60N 2/20

(54) **Fahrzeugsitz mit einem bananenförmigen Verbindungsmittel zwischen der Rückenlehne und dem Sitzteil**

(30) Priorität: 13.05.2009 DE 102009021212
(71) Anmelder: Johnson Controls GmbH, 51399 Burscheid (DE)
(72) Erfinder: Abraham, James, 51147 Köln (DE); Szegeny, Peter, 51371 Leverkusen (DE); Birke, Claudia, 40764 Langenfeld (DE)
(74) Vertreter: Wolff, Felix

(57) **Zusammenfassung**

Die vorliegende Erfindung betrifft einen Fahrzeugsitz mit einem Sitzteil und einer Rückenlehne die um einen Recliner relativ zueinander bewegbar sind und die durch ein zusätzliches, direkt oder indirekt an der Karosserie des Fahrzeuges verriegelbares Bauteil miteinander verbunden sind.

## Beschreibung

Die vorliegende Erfindung betrifft einen Fahrzeugsitz mit einem Sitzteil und einer Rückenlehne die um einen Recliner relativ zueinander bewegbar sind und die durch ein zusätzliches Bauteil miteinander verbunden sind.

Ein derartiger Sitz ist aus der deutschen Patentanmeldung DE 10 2007 055 082.2 bekannt.

Es war die Aufgabe der vorliegenden Erfindung die Sicherheit dieses gattungsgemäßen Fahrzeugsitzes zu erhöhen.

Gelöst wird die Aufgabe mit einem Fahrzeugsitz mit einem Sitzteil und einer Rückenlehne, die um einen Recliner relativ zueinander bewegbar sind und die durch ein zusätzliches Bauteil miteinander verbunden sind, wobei der Fahrzeugsitz ein Verriegelungsmittel aufweist, mit dem das zusätzliche Bauteil an der Karosserie des Fahrzeuges verriegelbar ist.

Die vorliegende Erfindung betrifft ein Fahrzeugsitz mit einem Sitzteil und einer Rückenlehne, die um einen Recliner relativ zueinander bewegbar sind. Dieser Sitz kann an einer beliebigen Stelle in dem Fahrzeug angeordnet sein. Es kann sich folglich um einen Fahrer oder Beifahrersitz oder einen Sitz in einer der dahinter angeordneten Sitzreihen handeln. Der erfindungsgemäße Fahrzeugsitz kann einer oder mehreren Personen Platz bieten. Es kann sich bei dem erfindungsgemäßen Fahrersitz folglich auch um eine Sitzbank handeln.

Erfindungsgemäß sind die Rückenlehne und das Sitzteil neben dem Recliner durch ein zusätzliches Bauteil miteinander verbunden. Vorzugsweise ist dieses Bauteil zumindest an der Rückenlehne drehbar oder schwenkbar vorgesehen. Besonders bevorzugt ist dieses Bauteil jedoch auch an dem Sitzteil und/oder an einer der Schienen, mit dem das Sitzteil verschieblich an der Karosserie des Fahrzeuges gelagert ist, drehbar gelagert. Ganz besonders bevorzugt ist das Bauteil bananenförmig, L-förmig oder -bumerangförmig gestaltet. Dieses Bauteil hat insbesondere Vorteile bei der Überführung des Fahrzeugsitzes in die sogenannte Easy-Entry- und/oder Fold-Flat Position. In der Easy-Entry-Position ist die Rückenlehne um 40-50° bezogen auf die Vertikale in Richtung des Sitzteils geneigt. In der Fold-Flat Position ist die Rückenlehne im Wesentlichen parallel zu dem Sitzteil ausgerichtet.

Um zu vermeiden, dass der Fahrzeugsitz insbesondere das Sitzteil ungewollter Weise in eine dieser Stellungen gelangt, weist der erfindungsgemäße Fahrzeugsitz ein Verriegelungsmittel auf, mit dem das zusätzliche Bauteil mit der Karosserie des Fahrzeuges verriegelbar ist. Mit der Karosserie verriegelbar im Sinne der Erfindung bedeutet, das Kräfte via dem Verriegelungsmittel direkt oder indirekt in die Karosserie einleitbar sind.

Dieses Verriegelungsmittel ist erfindungsgemäß von einer verriegelnden Stellung in eine nicht verriegelnde Stellung und umgekehrt überführbar. Die verriegelnde Stellung wird das Verriegelungsmittel vorzugsweise zumindest dann einnehmen wenn sich der Fahrzeugsitz in seiner Gebrauchsstellung befindet. Soll der Fahrzeugsitz hingegen in die Easy-Entry- oder Fold-Flat Position überführt werden, muss vorher das Verriegelungsmittel entriegelt werden.

Vorzugsweise wird die Stellung des Verriegelungsmittels zumindest teilweise und/oder zeitweise durch die Stellung der Rückenlehne gesteuert; d. h. wenn die Rückenlehne in ihre Easy-Entry- und/oder Fold-Flat Position überführt wird, wird automatisch das Verriegelungsmittel entriegelt. Analog wird das Verriegelungsmittel wieder in seine verriegelnde Position überführt, sobald die Rückenlehne von ihrer Easy-Entry- und/oder Fold-Flat Position in die Gebrauchsposition überführt worden ist. Ganz besonders bevorzugt erfolgt die Steuerung des Verriegelungsmittels durch den Recliner, der zwischen der Rückenlehne und dem Sitzteil angeordnet ist.

Vorzugsweise ist das Verriegelungsmittel an einem karosseriefesten Verbindungselement vorgesehen. Dieses Verbindungselement kann direkt oder indirekt mit der Karosserie verbunden sein. Wichtig ist nur, dass Kräfte von der Rückenlehne oder dem Fahrzeugsitz via dem Verriegelungsmittel und dem Verbindungselement in die Fahrzeugkarosserie einleitbar ist. Vorzugsweise handelt es sich bei dem Verbindungselement um einen Beschlag des Recliners, der mit dem Fahrzeug fest verbunden vorgesehen ist.

Weiterhin bevorzugt wirkt das Verriegelungselement mit einem Verriegelungsgegenstück verriegelnd zusammen. Dieses Verriegelungsgegenstück ist an dem zusätzlichen Bauteil vorgesehen.

In einer weiteren bevorzugten Ausführungsform ist zwischen dem Verriegelungsmittel und dem Verriegelungsstück im verriegelten Zustand zumindest zeitweise Spiel vorhanden. Dieses Spiel dient insbesondere dazu die Rückenlehne in ihrer Gebrauchsposition zu Komfortzwecken um einige Winkelgerade verstellen zu können, ohne dass dies durch das Verriegelungsmittel verhindert würde oder die Verriegelung aufheben würde.

Weiterhin bevorzugt ist das Verriegelungsmittel drehbar an dem Verbindungselement vorgesehen. Ganz besonders bevorzugt ist das Verriegelungsmittel in eine Drehrichtung vorzugsweise in die Drehrichtung, in der es verriegelnd mit dem Gegenstück zusammenwirkt, vorgespannt. Diese Vorspannung kann beispielsweise durch eine Torsionsfeder erfolgen.

Vorzugsweise ist an dem Recliner ein Beschlag vorgesehen, der drehfest mit der Rückenlehne verbunden ist und der mit dem Verriegelungsmittel steuernd zusammenwirkt. Dadurch kann er bei einer Bewegung der Rückenlehne beispielsweise in die Easy-Entry- und/oder Flat-Fold- Position das Verriegelungsmittel lösen beziehungsweise beim Überführen der Rückenlehne in die Gebrauchsposition die Überführung des Verriegelungsmittels in seine verriegelnde Position zulassen.

Vorzugsweise weist der Beschlag dafür eine Nocke auf, die ganz besonders bevorzugt mit einer Abrollkontur, die sich an dem Verriegelungsmittel befindet, zusammenwirkt.

Ganz besonders bevorzugt weist das Verriegelungsmittel eine Verriegelungskontur auf, die verhindert, dass sich das Verriegelungsmittel von dem

Verriegelungsgegenstück löst, während sich das Verriegelungsmittel in seiner verriegelnden Position befindet. Vorzugsweise handelt es sich bei dieser Verriegelungskontur um einen Hinterschnitt, mit dem das Verriegelungsstück zumindest zeitweise und/oder zumindest teilweise im Crashfall zusammenwirkt.

Vorzugsweise verhindert das Verriegelungsmittel das die Rückenlehne und/oder das Sitzteil die Gebrauchsposition selbsttätige verläßt.

Im Folgenden sind die Erfindungen anhand der Figuren 1 bis 3 erläutert. Diese Erläuterungen sind lediglich beispielhaft und schränken den allgemeinen Erfindungsgedanken nicht ein.
Figur 1 zeigt den erfindungsgemäßen Fahrzeugsitz.
Figur 2 zeigt das Verriegelungsmittel in seiner verriegelnden Position.
Figur 3 zeigt das Verriegelungsmittel in seiner entriegelten Position.

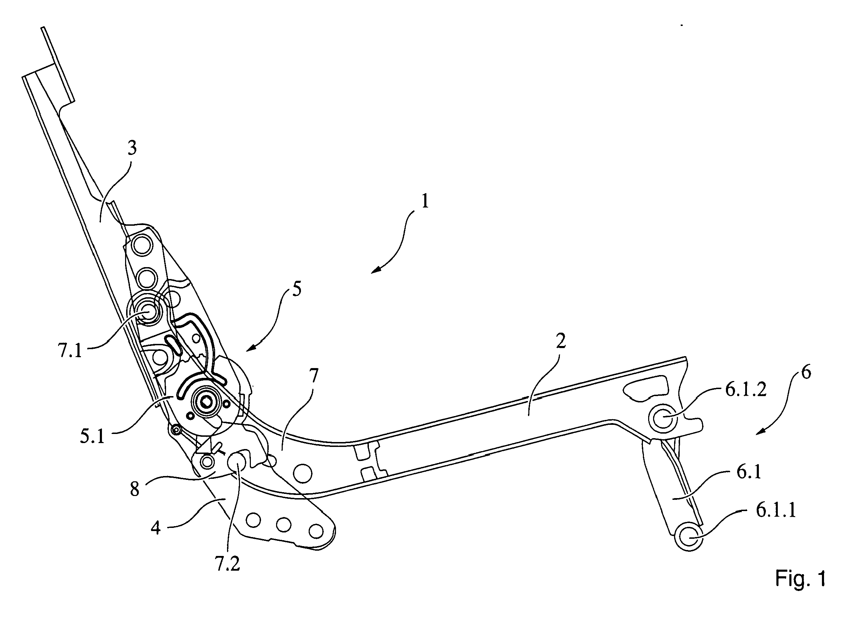

Figur 1 zeigt den erfindungsgemäßen Fahrzeugsitz 1, der ein Sitzteil 2 und eine Rückenlehne 3 aufweist. Ein derartiger Fahrzeugsitz ist beispielsweise aus der DE 10 2007 055 082.2 bekannt. Diese Patentanmeldung wird hiermit als Referenz eingeführt und gilt somit als Teil der Offenbarung dieser Patentanmeldung. Die Rückenlehne ist drehbar mit einem Recliner 5 an dem Sitzteil 2 angeordnet.
Desweiteren ist zwischen dem Sitzteil 2 und der Rückenlehne 3 ein zusätzliches, hier bananenförmiges Verbindungselement angeordnet, dessen eines Ende 7.1 an der Rückenlehne drehbar angeordnet ist. Der erfindungsgemäße Fahrzeugsitz ist in seinem rückwärtigen Teil mit einem Verbindungselement 4 und in seinem vorderen Bereich mit einer Lagerung 6 mit der Karosserie des Fahrzeuges verbunden. Die Lagerung 6 weist einen Hebel 6.1 auf, dessen erstes Ende 6.1.1 mit der Fahrzeugkarosserie drehbar und dessen zweites Ende 6.1.2 drehbar mit dem Sitzteil des erfindungsgemäßen Fahrzeugsitzes verbunden ist. Dadurch ist es möglich den Fahrzeugsitz in einer Vorwärtsbewegung von einer angehobenen, hier dargestellten, in eine abgesenkte beispielsweise Flat-Fold-Position zu überführen, indem der Hebel 6.1 im Uhrzeigersinn um sein erstes Ende 6.1.1 gedreht wird. Erfindungsgemäß weist der Fahrzeugsitz außerdem noch ein Verriegelungsmittel 8, hier einen Verriegelungshaken, auf, der mit einem Verriegelungsgegenstück 7.2 das sich an dem zusätzlichen, hier bananenförmigen Verbindungselement befindet, auf. Mit diesem Haken 8 wird insbesondere verhindert, dass sich das Verbindungselement 7 von dem Verbindungselement 4 in der Gebrauchsstellung des Fahrzeugsitzes signifikant wegbewegt und somit eine ungewollte Überführung des Fahrzeugsitzes in die Flat-Fold- Position möglich ist.

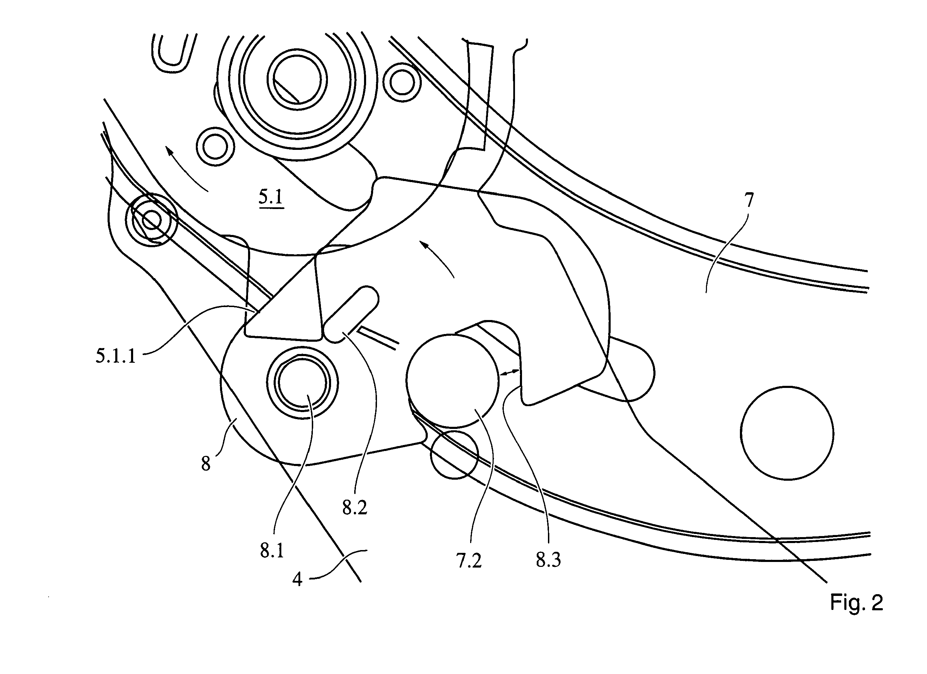

In Figur 2 ist noch einmal das Verriegelungsmittel 8 detailliert dargestellt. Dieses ist drehbar an dem Verbindungselement 4 vorgesehen und entgegen dem Uhrzeigersinn drehend vorgespannt. Desweiteren weist das Verriegelungsmittel eine Abrollkontur 8.2 auf, die mit einer Nocke 5.1.1, die an einem Beschlag 5.1 des Recliners 5 angeordnet ist, zusammenwirkt. Diese Nocke 5.1.1 verhindert, dass sich das Verriegelungsmittel entgegen der Uhrzeigerrichtung verdreht. Desweiteren ist in dieser Darstellung zu erkennen, dass das Verriegelungsmittel eine Verriegelungskontur 8.3 hier einen Hinterschnitt aufweist, der verhindert, dass sich das Verriegelungsmittel 8 von dem Verriegelungsgegenstück 7.2 löst, solange sich das Verriegelungsmittel in der verriegelnden Position befindet. Desweiteren ist zu erkennen, dass zwischen dem Verriegelungsmittel 8 und dem Verriegelungsgegenstück 7.2 ein gewisses Spiel herrscht, d. h. das Verriegelungsmittel 8 wirkt erst nach Überbrückung der durch den Doppelpfeil gekennzeichneten Distanz mit dem Verriegelungsgegenstück 7.2 verriegelnd zusammenwirken. Diese Ausführungsform hat den Vorteil, dass der Rückenlehne in ihrem Komfortbereich verstellt werden kann, ohne dass die Verriegelung entriegelt wird beziehungsweise ohne dass diese Verstellung behindert wird.

Beim Überführen der Rückenlehne in die Easy-Entry- und/oder Flat-Fold- Position wird der Beschlag 5.1, wie durch den Pfeil dargestellt, im Uhrzeigersinn verdreht. Dadurch wird die Nocke 5.1.1ebenfalls im Uhrzeigersinn verdreht. Dabei rollt die Abrollkontur 8.2 an der Nocke 5.1.1 ab und das Verriegelungsmittel 8 dreht sich entgegen dem Uhrzeigersinn, wie ebenfalls durch einen Pfeil dargestellt.

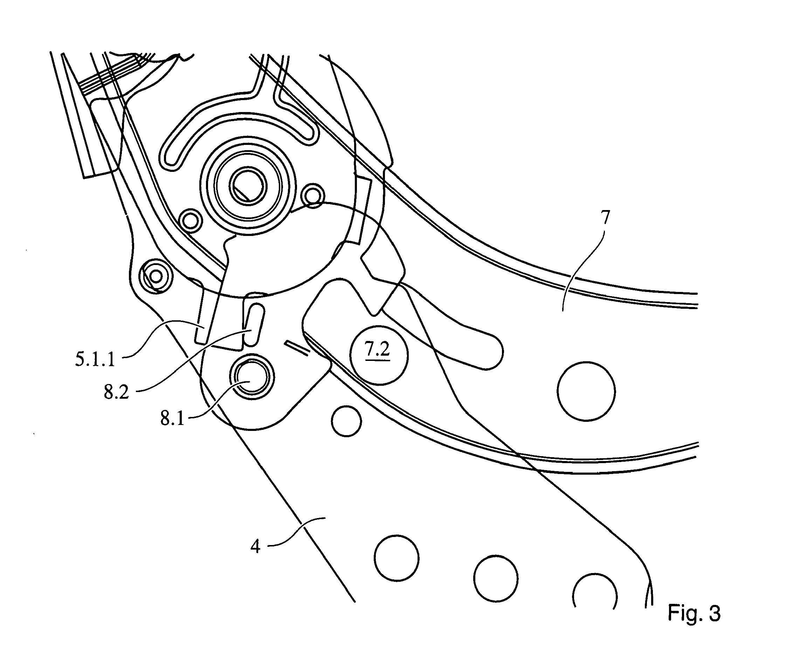

Dadurch gelangt das Entriegelungsmittel in die in Figur 3 dargestellte entriegelte Stellung, in der sich das bananenförmige Verbindungselement 7 von der Verbindungselement 4 wegdrehen kann. Sobald die Rückenlehne wieder in ihre Gebrauchsstellung zurückgedreht ist, wirkt das Verriegelungsmittel 8 wieder verriegelnd mit dem Verriegelungsgegenstück 7.2 zusammen.

### Bezugszeichenliste:

- 1: Fahrzeugsitz
- 2: Sitzteil
- 3: Rückenlehne
- 4: Verbindungselement, insbesondere zur Fahrzeugkarroserie
- 5: Recliner
- 5.1: Recliner Beschlag, der mit der Rückenlehne
- 5.1.1: Nocke
- 6: vordere Lagerung des Sitzteils
- 6.1: Hebel
- 6.1.1: erstes Ende
- 6.1.2: zweites Ende
- 7: Verbindungselement
- 7.1: Drehpunkt
- 7.2: Verriegelungsgegenstück, Verriegelungsbolzen
- 8: Verriegelungsmittel, Verriegelungshaken
- 8.1: Drehpunkt
- 8.2: Abrollkontur
- 8.3: Verriegelungskontur

## Patentansprüche

1. Fahrzeugsitz (1) mit einem Sitzteil (2) und einer Rückenlehne (3), die um einen Recliner (5) relativ zueinander bewegbar sind und die durch ein zusätzliches Bauteil (7) miteinander verbunden sind, **dadurch gekennzeichnet, dass** er ein Verriegelungsmittel (8) aufweist, mit dem das zusätzliche Bauteil (7) direkt oder indirekt an der Karosserie des Fahrzeuges verriegelbar ist.

2. Fahrzeugsitz (1) nach Anspruch (1), **dadurch gekennzeichnet, dass** der Recliner (5) die Stellung des Verriegelungsmittels zumindest zeitweise steuert.

3. Fahrzeugsitz (1) nach Anspruch 1 oder 2, **dadurch gekennzeichnet, dass** das Verriegelungsmittel (8) an einem karosseriefesten Verbindungselement (4) vorgesehen ist.

4. Fahrzeugsitz nach einem der voranstehenden Ansprüche, **dadurch gekennzeichnet, dass** das Verriegelungsmittel (8) mit einem Verriegelungsgegenstück (7.2) verriegelnd zusammenwirkt.

5. Fahrzeugsitz nach einem der Ansprüche 2 oder 3, **dadurch gekennzeichnet, dass** zwischen dem Verriegelungsmittel (8) und dem Verriegelungsgegenstück (7.2) in dessen verriegelnder Stellung zumindest zeitweise Spiel vorhanden ist.

6. Fahrzeugsitz nach einem der voranstehenden Ansprüche, **dadurch gekennzeichnet, dass** das Verriegelungsmittel (8) drehbar an dem Verbindungselement (4) vorgesehen ist.

7. Fahrzeugsitz nach einem der voranstehenden Ansprüche, **dadurch gekennzeichnet, dass** an der Rückenlehne (3) ein Beschlag (5.1) drehfest angeordnet ist, der mit dem Verriegelungsmittel (8) zusammenwirkt.

8. Fahrzeugsitz nach Anspruch 6, **dadurch gekennzeichnet, dass** der Beschlag (5.1) mit einer Abrollkontur (8.2) zusammenwirkt.

9. Fahrzeugsitz nach einem der voranstehenden Ansprüche, **dadurch gekennzeichnet, dass** das Verriegelungsmittel eine Verriegelungskontur (8.3) aufweist.

10. Fahrzeugsitz nach einem der voranstehenden Ansprüche, **dadurch gekennzeichnet, dass** das Verriegelungsmittel (8) eine selbsttätige Verstellung des Fahrzeugsitzes aus der Gebrauchs-Position verhindert.
